Europäisches Patentamt

European Patent Office

Office européen des brevets

(11) Publication number: **0 223 914**
**A2**

# EUROPEAN PATENT APPLICATION

(21) Application number: **86110086.5**

(22) Date of filing: **22.07.86**

(51) Int. Cl.⁴: **A62B 7/08**

(30) Priority: **28.11.85 JP 266239/85**

(43) Date of publication of application:
**03.06.87 Bulletin 87/23**

(84) Designated Contracting States:
**CH DE FR GB IT LI SE**

(71) Applicant: **NIKKA MICRON CO., LTD**
**3-35-14 Hongo Bunkyo-ku**
**Tokyo(JP)**

(72) Inventor: **Sekiguchi, Sigeo**
**c/o NIKKA MICRON CO LTD 3-35-14 Hongo**
**Bunkyo-ku**
**Tokyo(JP)**

(74) Representative: **Prüfer, Lutz H., Dipl.-Phys.**
**Harthauser Strasse 25d**
**D-8000 München 90(DE)**

(54) **Oxygen generator.**

(57) A compact oxygen generator which can supply oxygen safely and easily in case of emergencies.

An oxygen recovery port (12) is provided at the top of a container main body (10) in which oxygen is generated continuously for a prescribed period of time by solution reaction, a filtering mechanism (14) to clean and filter generated oxygen is provided at said oxygen recovery portion (12) in a freely attachable/detachable manner, and a lid (18) housing an oxygen supply mechanism (16) which communicates with said filtering mechanism (14) is provided at the top opening (15) of the filtering mechanism - (14) in a freely attachable/detachable manner. The structure is thus made simple and compact, which enables safe and easy supply of oxygen in case of emergencies.

FIG.2

## Oxygen Generator

The present invention relates to an oxygen generator and more particularly to a compact oxygen generator which can supply oxygen safely and easily in case of emergencies.

As anoxia due to sudden illness, fire, exercise or in emergencies can be averted by promptly supplying prescribed amount of oxygen, various types of oxygen generators have been proposed or produced for the sake of convenience of consumers.

Methods for generating oxygen by such oxygen generators are classified roughly into two types; a thermal reaction method in which a compound is ignited with an igniting agent, and a solution reaction method in which a compound is reacted with a liquid such as water. However, both methods are defective in that it is necessary to take safety measures against heat, pressure, etc., making the generator complicated in structure and bulky in size and pushing up manufacturing cost.

The present invention aims at providing a compact oxygen generator of simple structure at less manufacturing cost by providing an oxygen recovery port at the top of the main body of a container in which oxygen is continuously generated by solution reaction for a prescribed period of time, fitting a filtering mechanism to cleanse and filter generated oxygen in the oxygen recovery port in a freely attachable/detachable manner and attaching a lid to an opening at the top of said filtering mechanism in a freely attachable/detachable manner, and providing inside the lid an oxygen supply mechanism which communicates with a filtering mechanism.

The filtering mechanism according to this invention is so structured as to filter generated oxygen through a filter member and filtered water while the oxygen supply mechanism is so structured that it opens/closes interlockingly with the opening/closing operation of the lid member of the lid.

Packings are inserted between the container main body and the oxygen filtering member and between the oxygen filtering portion and the portion where the lid portion is mounted. It is highly effective as a safety measure to provide notches to a part of these packings to maintain the pressure inside the container and the oxygen filtering mechanism at or below the prescribed level.

In the oxygen generator according to the present invention, oxygen generated in the container is cleansed and filtered by the filtering mechanism as well as cooled by heat exchange. It is then supplied to users via the supply mechanism which is interlocked with the led member of the lid.

Fig. 1 is a perspective view of an oxygen generator according to the present invention;

Fig. 2 is a sectional schematic view of a portion of the oxygen generator shown in Fig. 1;

Fig. 3 is a sectional view of the critical portion when the lid member of the oxygen generator shown in Fig. 2 is open;

Fig. 4 is a perspective view of an attachment used for supplying oxygen which is obtained in the oxygen generator shown in Fig. 1.

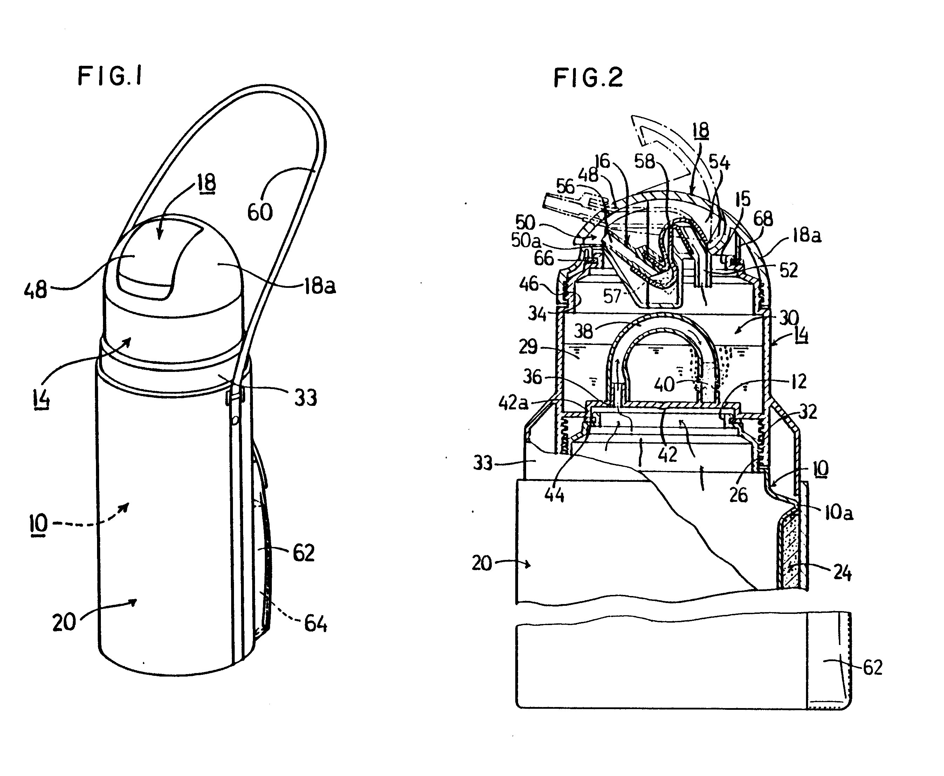

In Figs. 1 through 3, an oxygen generator according to the present invention comprises a container main body 10 for continuously generating oxygen for a prescribed period of time by solution reaction, a cleaning/filtering mechanism 14 mounted in a freely attachable/detachable manner at a predetermined position on the outside of an oxygen recovery port 12 provided at the top of the main body 10, a lid 18 which is mounted on the top opening 15 of said filtering mechanism 14 in a freely attachable/detachable manner and which houses a supply mechanism 16 of oxygen which has been cleansed and filtered, and a case 20 which contains the main body 10 to facilitate transportation.

The container main body 10 is a cylindrical container of a specified capacity made of synthetic resin such as polypropylene. The outside and the bottom of the bottle-shaped container is wrapped around with a heat insulating material 24 made of polystyrene foam, and a male screw 26 is provided around the periphery of said oxygen recovery port 12 at a predetermined position.

The filtering mechanism 14 is made of similar synthetic resin as that of the container main body 10, and preferably comprises a transparent filtering chamber 30 for storing a prescribed amount of cleansed and filtered water 29. At the bottom of the filtering chamber 30 are provided a female screw 32 which mates with said male screw 26 and a lower portion 33 which is provided around the periphery coaxially with the female screw 32 and which extends to a bulging shoulder 10a. A male screw 34 is further provided around the periphery at a predetermined position outside said top opening 15.

At the bottom of the filtering chamber 30, an oxygen intake port 36 is bored at a predetermined position which opposes the oxygen recovery port 12. A filter member 40 made of a polyethylene binder, for example, is connected to said intake port 36 to function as a check valve as well via a flexible arc-shaped duct 38. Said filter member 40 is fixed at the bottom of the filtering chamber. The filtering mechanism 14 is sealed from outside by forming a concave portion 42 at the bottom thereof and by having the stepped member 42a of the portion 42 and a packing mounted around the outer periphery of the recovery port 12 of the container 10 closely pressed to each other.

The lid 18 is so structured that a female screw 46 is provided to the inner edge of a substantially semi-spherical body 18a made of synthetic resin and by having said female screw mate with the male screw 34 provided around the periphery of said top opening 15, and a lid member 48 is hinged to the top portion thereof in a member to allow free opening/closing. A housing chamber 50 for the oxygen supply mechanism 16 is further provided inside the lid member 48.

From a part of the housing chamber 50 is projected an oxygen exhaust pipe 52 which communicates with the inside of said filtering chamber 30 and the oxygen supply mechanism 16 is connected thereto. The oxygen supply mechanism 16 comprises an oxygen supply pipe 56 which is journaled to a supporting portion 54 inside the lid member 48 and a flexible duct 58 which connects said oxygen supply pipe 56 and said exhaust pipe 52.

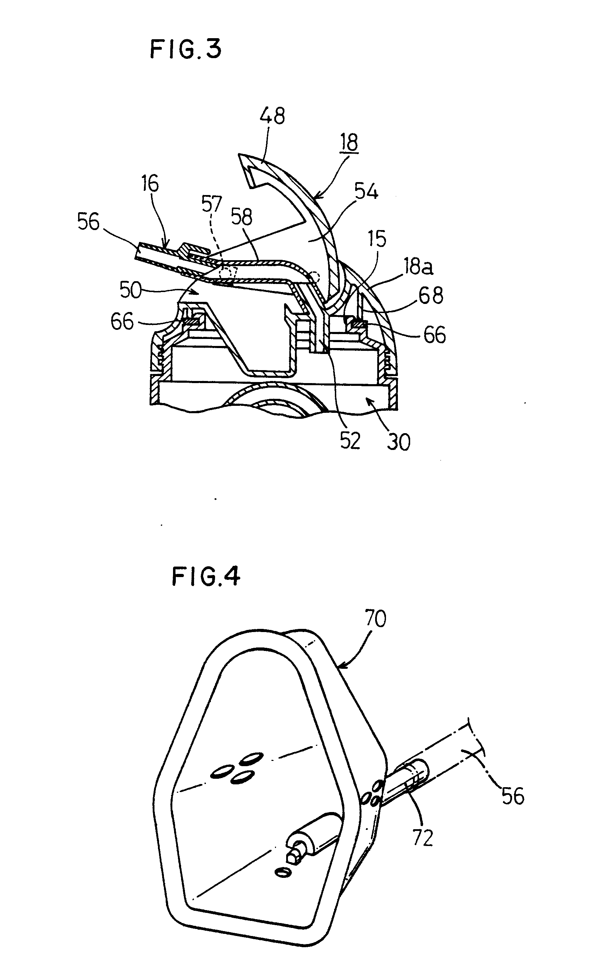

The oxygen supply mechanism 16 is so structured that when the lid member 48 is closed, the tip portion of the supply pipe 56 comes to engage with the abutting portion 50a of the housing chamber 50 to make said supply pipe 56 swing at a portion 57 of the supporting portion 54. As a result, the flexible duct 58 bends as shown in Fig. 2 to stop oxygen from the exhaust pipe 52. When the lid member 48 is opened, on the other hand, the flexible duct 58 which works interlockingly with the lid member is extended and allows oxygen to be exhausted. (Refer to Fig. 3.)

Inside the flexible duct 58 mounted to the exhaust pipe 52 is provided a notch (not shown) axially. The duct is so constructed that it would come off when the inner pressure exceeds 1 kg/cm², for example, thus preventing the inner pressure rising higher than necessary.

The case 20 is a nylon bag with a lining of polyurethane. A strap 60 for carrying is attached at the top of the bag while a pocket is attached outside thereon at a prescribed position. A pocket 62 is made to contain a raw material bag 64 filled with a prescribed amount of sodium peroxide and metallic salt catalyst such as electrolytic manganese dioxide, for example.

In Figs. 2 and 3, reference numeral 66 denotes the packing mounted around the periphery of the opening 15. The packing 66 is pressed and retained by a rib 68 which is projected inside the semi-spherical body 18a to achieve sealing from outside. By providing a notch (not shown) on said packing 66 and aforementioned packing 44 radially as well as bases for the screws 34, 46, 26 and 32 at prescribed positions, pressure is guided to outside through said notch when the inner pressure exceeds 1 kg/cm² level.

For using an oxygen generator according to the present invention, the lid 18 is removed from the filtering mechanism 14, the filtering chamber 30 is filled with a prescribed amount of water (filtered water) 29, and then the lid is attached firmly again.

The filtering mechanism 14 is then removed from the main body 10 and after introducing the prescribed amount of water and sodium peroxide and electrolytic manganese dioxide (catalyst) in the raw material bag 64 to the main body 10, the filtering mechanism 14 is mounted again.

At this stage, decomposition reaction, $2Na_2CO_3 \bullet 3H_2O \rightarrow 2(Na_2 \bullet H_2O) + H_2O + 1.5O_2$, takes place inside the main body 10 to generate oxygen gas. the decomposition reaction is extremely violent in general. Depending on the amount of catalyst and water used, the temperature reaches 100°C instantaneously, creating a bumping state. Oxygen and water vapor are let out simultaneously and the reaction is completed in a short time. It is therefore necessary to make adjustment in order to have oxygen generated constantly for a certain period of time by forming the catalyst in solids with polyvinyl alcohol which disintegrates in water at different times or by forming it as a mixture of strictly prepared fine powder of electrolytic manganese dioxide and potassium permanganate.

The oxygen gas generated inside the main body 10 is guided into the filtered water 29 in the filtering chamber 30 via the recovery port 12, the inlet port 36, duct 38, and filter member 40. It turns into air bubbles in the filtered water 29 and cooled down to a prescribed temperature by heat exchange. After alkali mist is removed from the oxygen gas (air bubbles), it stays in the space in the filtering chamber 30. By opening the lid member 48, the cleaned and filtered oxygen is supplied to users via the supply pipe 56 of the supply mechanism 16 which is interlocked with the lid member 48.

It is quite desirable in achieving smooth supply if a flexible funnel-shaped attachment 70 made of soft synthetic resin, etc. as shown in Fig. 4 is placed in the pocket 62 and a smaller diameter portion 72 of the attachment 70 is connected to the supply pipe 56 for supplying oxygen to users.

When the pressure inside the main body 10 and the filtering chamber 30 rises above the prescribed pressure level due to accidents such as abnormal generation of oxygen, the inner pressure is let out through the notches on the packings 44 and 66, or by detaching the duct 58 from the exhaust pipe 52 so as to prevent damages to the generator in advance.

As described in the foregoing, the oxygen generator according to the present invention is simple in structure, compact in side and hence, cheaper in the manufacturing cost. It is also advantageous in that the preventive measures against heat and pressure are secured sufficiently allowing safe and easy supply of oxygen in case of emergencies.

The oxygen generator according to the present invention has been explained referring to a preferred embodiment in the above. However, the present invention is not limited to the above embodiment alone. It is needless to say that various modifications in design may be possible without departing from the spirit of this invention; for example, the oxygen supply mechanism may be provided with a sounder means such as a whistler which generates sound with air vibration or with a mechanical means which is actuated by the charges in internal pressure in the passages of oxygen so that the state of oxygen generation may be confirmed with sound or mechanical movements other than the generation of bubbles in the water in the chamber.

## Claims

(1) An oxygen generator which is characterized in that an oxygen recovery port (12) is provided at the top portion of a container main body (10) in which oxygen is generated continuously for a predetermined period of time by solution reaction, a filtering mechanism (14) to clean and filter generated oxygen is mounted in a freely attachable/detachable manner on said oxygen recovery port (12), and a lid (18) is provided at the top opening (15) of said filtering mechanism (14) in a freely attachable/detachable manner, said lid - (18) housing an oxygen supply mechanism (16) which communicates with said filtering mechanism (14).

(2) The oxygen generator as claimed in Claim 1 wherein said filtering mechanism (14) filters generated oxygen through a filter member (40) and filtered water (29).

(3) The oxygen generator as claimed in Claim 1 or 2 wherein said oxygen supply mechanism - (16) opens/closes interlockingly with the opening/closing of the lid member (48) of the lid - (18).

(4) The oxygen generator as claimed in Claim 1,2 or 3 wherein packings (44), (66) are inserted respectively between the container main body (10) and the oxygen filtering mechanism (14) and between the oxygen filtering mechanism (14) and the portion (68) where the lid body (18a) is mounted and notches are provided on a part of said packings (44), (66) to maintain the pressure inside the container body (10) and the oxygen filtering mechanism (14) below the prescribed pressure.

(5) The oxygen generator as claimed in Claim 1 wherein a means is provided a part of the oxygen supply mechanism (16) in order to maintain the pressure inside the oxygen filtering mechanism - (14) at or below the prescribed pressure.

FIG.1

FIG.2

# FIG.3

# FIG.4